# EUROPEAN PATENT APPLICATION

(11) **EP 1 359 339 A2**
(43) Date of publication of application: **05.11.2003**
(21) Application number: 03252650.1
(22) Date of filing: 25.04.2003
(51) Int. Cl.: F16D 69/00

(54) **Method of manufacturing a friction plate**

(30) Priority: 26.04.2002 JP 2002126175
(71) Applicant: Dynax Corporation, Chitose-shi, Hokkaido (JP)
(72) Inventor: Kawai, Satoshi, Chitose-shi, Hokkaido (JP); Kodama, Takashi, Chitose-shi, Hokkaido (JP); Saito, Ryuichi, Chitose-shi, Hokkaido (JP)
(74) Representative: Meddle, Alan Leonard

(57) **Abstract**

A friction plate is produced by electrostatically spraying a particulate mixture (20) containing the friction material and a thermosetting resin onto a core plate (40) so that the particulate mixture is temporarily attached to the core plate by electrostatic attraction, and then heating the core plate with the mixture attached thereto in order to cure the resin.

## Description

### FIELD OF THE INVENTION

This invention relates to the manufacture of friction plates used in a frictional engagement apparatus such as the clutch or brake of an automobile, or a clutch or brake in an industrial machine or a construction machine.

### BACKGROUND OF THE INVENTION

A brake or clutch in an automobile or other machine transmits power by frictional engagement, or absorbs energy by using friction to convert kinetic energy to heat. In such a brake or clutch, a friction plate comprising a friction layer bonded to a metal core plate is generally used. A frictional engagement apparatus is classified either as a wet-type or dry-type apparatus, depending on whether or not a lubricating oil is supplied to the frictional surface. It is further classified either as a one-sided type or a two-sided type, depending on whether the friction layer is provided on only one side of a core plates or on both sides of the core plate.

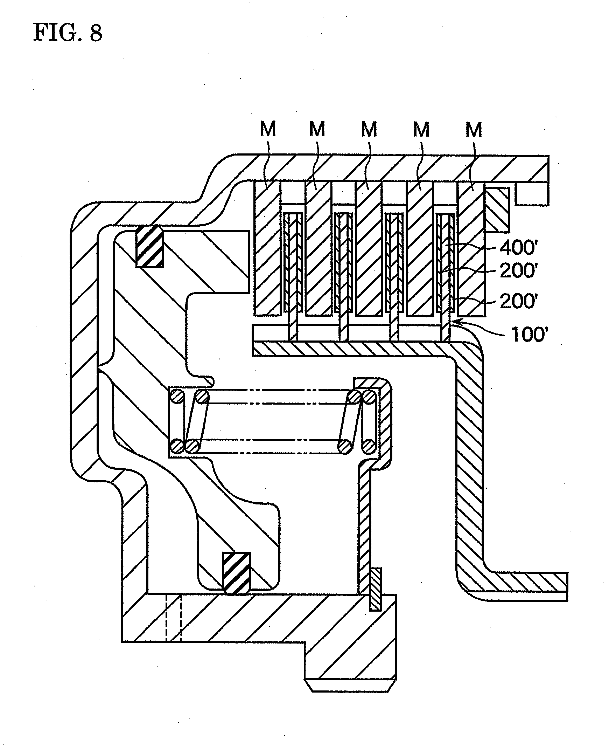

An example of a two-sided, wet type (multiplate) frictional engagement apparatus is shown in FIG. 8. Each friction plate 100' comprises a friction layer 200' on both sides of a core plate 400'. The friction layers are engageable with mating plates M.

In a frictional engagement apparatus of this type, paper, elastomer, carbon, metal, an inorganic substance, resin, etc., are usually used as base materials in the friction layer of the friction plate. Especially when carbon, inorganic substances, and resin are used in the friction material, the material is provided either in powdered form, or in staple fiber-shaped particles, and the friction layer is formed by sinter molding. One conventional method of manufacturing a friction plate is segment lamination molding. In this process, a die is filled with a powdery and/or a staple fiber-shaped friction material, and heat is applied to the material to form a sheet-shaped friction element. This friction element is then bonded to a core plate. Another conventional method is the mold forming process, in which a core plate is inserted into a die, and the remaining space in the die is filled with a powdery or staple fiber-shaped friction material. When the core plate and the friction material are heated, calcination of the friction material and adhesion to the core plate are achieved at the same time.

In the case of a friction plate for use in a wet type frictional engagement apparatus, oil grooves need to be formed in the surface of the friction layer for the flow of lubricating oil. In a conventional method, after a flat friction plate is formed, lands and grooves are formed in the plate by pressing the plate by means of a die having projections and concavities.

A friction layer usually comprises a mixture of two or more kinds of powdery or staple fiber-shaped materials. Problems arise in the manufacture of friction plates using conventional methods. The conventional methods are labor-intensive. Moreover, an auxiliary apparatus such as a powder filling machine is needed in order to introduce the friction material into a die uniformly. Furthermore, yield is low because extra material is needed in order to ensure uniformity in the friction material. In addition, the cost of the manufacturing facilities is high because a calcining furnace and a large capacity press are necessary for calcining the friction material and bonding it to a core plate.

Furthermore, when grooves are to be formed in a friction plate for use in a wet type frictional engagement apparatus, and the thickness of the friction layer is small, press working would give rise to a large difference between the densities of the grooved sections and the land sections. Consequently, friction plates having thin friction layers are grooved by machining. However, the step of machining the grooves increases the number of process steps and requires additional labor.

### SUMMARY OF THE INVENTION

This invention solves the above-described problems by utilization of a method comprising the following steps. The first step is to prepare a particulate mixture comprising a thermosetting resin and a friction material from the group consisting of powder, staple fiber-shaped material, and mixtures thereof. The particulate mixture is electrified, and temporarily attached to a metal core plate by spraying or scattering the particulate mixture onto the core plate. Then, the particulate mixture is heated while it is temporarily attached to the core plate. This causes the thermosetting resin to cure, so that the particulate mixture is converted to a friction layer and bonded to the core plate.

The particulate mixture is temporarily attached to the surface of the core plate by an electrostatic attraction force. Transfer of the core plate to the heat treatment process can be accomplished easily, since the particulate mixture is prevented from falling off the core plate.

### BRIEF DESCRIPTION OF DRAWINGS

FIG. 1 is a schematic view of an electrostatic coating apparatus used in a friction plate manufacturing method according to the invention;

FIG. 2(a) is an front elevational view illustrating a core plate having through holes, for use in a modified manufacturing method according to the invention, in which the friction material is more strongly bonded to a core plate;

FIG. 2(b) is a cross-sectional view taken on plane b-b of FIG. 2(a), showing the particulate mixture temporarily attached to the core plate;

FIG. 3 is a cross-sectional view of a friction plate produced by a manufacturing method according to the invention, wherein the diameter of the pores in the friction layer varies along the direction of thickness of the layer;

FIG. 4(a) is a front elevational view of a friction plate produced by a manufacturing method according to the invention, in which grooves are provided in the surface of the friction layer;

FIG. 4(b)is a cross-sectional view taken on plane b-b of FIG. 4(a);

FIG. 5(a) is a front elevational view of another friction plate produced by a manufacturing method according to the invention, in which grooves are provided in the surface of the friction layer;

FIG. 5(b) is a cross-sectional view taken on plane b-b of FIG. 5(a);

FIG. 6 is a graph illustrating frictional wear characteristics of a carbon friction layer produced by a method according to the invention, and a conventional paper friction layer;

FIG. 7 is a graph comparing abrasion loss in a carbon friction layer produced by a method according to the invention, and a conventional paper friction layer; andFIG. 8 is a longitudinal cross-sectional view of a two-sided, wet-type frictional engagement apparatus.

### DETAILED DESCRIPTION OF THE PREFERRED EMBODIMENTS

In accordance with the invention, an electrostatic coating process is carried out in order to attach a friction material to a core plate temporarily, and a heat treatment process is carried out in order to bond the friction material to the core plate.

The material with which the core plate is to be coated is a particulate mixture including the friction material and a thermosetting resin, the resin being preferably in the form of a powder. The friction material may be a powdery material, a staple fiber-shaped material, or a mixture thereof. The friction material and the powdered thermosetting resin are mixed together to form the particulate mixture before coating is commenced. The use of this mixture enables the strength and friction performance of the friction layer to be maintained.

By way of example, a phenolic resin is a desirable binder for a powdery and/or staple fiber-shaped friction material. The materials may be mixed, partially melted, and granulated in order to produce the particulate mixture. In the granulation process, adjustments of the diameters of the pores in the friction layer may be achieved by adjusting the particle diameter.

The core plate preferably comprises a thermally conductive material such as steel or aluminum.

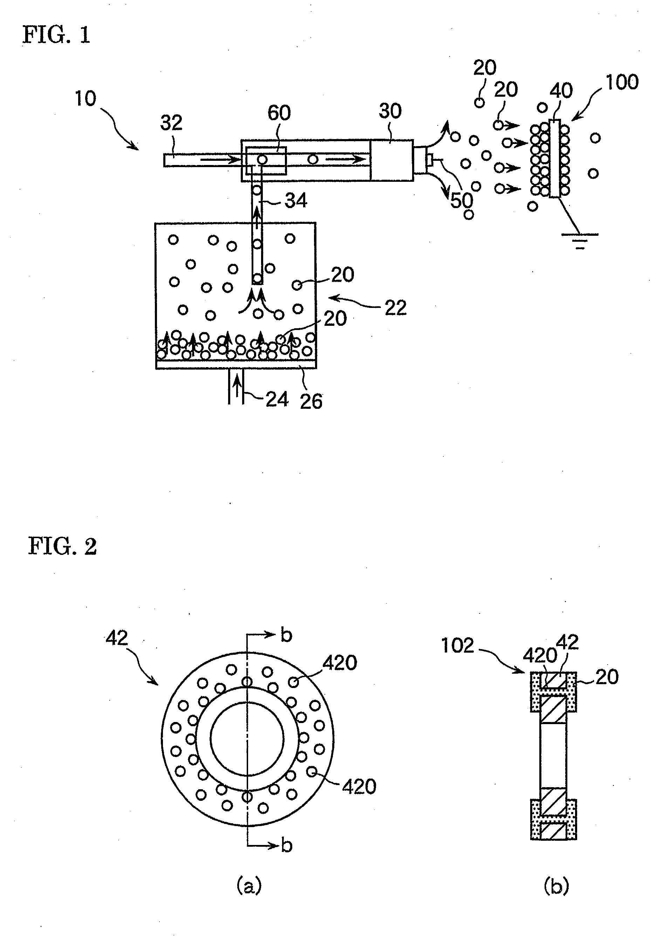

An electrostatic coating apparatus 10, as shown in FIG. 1, is used to attach a the particulate mixture to a core plate temporarily. The coating apparatus 10 comprises a supply tank 22 containing a the particulate mixture 20, and a spraying gun 30 for spraying the particulate mixture 20 as a jet. The particulate mixture 20 is sprayed from a nozzle 32 of the spraying gun 30, and is temporarily attached to a core plate 40 by electrostatic adhesion.

An air nozzle 24 is provided in the lower part of the supply tank 22. A jet of air from the nozzle 24 agitates the particulate mixture in the supply tank 22. A diaphragm 26, provided at the bottom of the supply tank 22 is caused to oscillate by the air jet so that the particulate mixture 20 will not collect and cohere at the bottom of the tank. Consequently, the particulate mixture is dispersed uniformly in the region of the supply tank in which the entrance to a transfer pipe 34 is located. The particulate mixture 20 in the supply tank 22 is drawn up through the transfer pipe 34 into the spraying gun 30 by air flowing through an air pipe 32.

A high voltage is applied between the core plate 40 and an electrode 50 in the nozzle of the spraying gun 30. An electrostatic field is generated between the electrode and the core plate. The particulate mixture 20 becomes electrically charged as it is projected from the nozzle and passes through the electrostatic field. The electrostatic charge on the particles causes them to become attached to the surface of the core plate 40. The pressure and density of the particulate mixture 20 sprayed to the core plate 40 is adjusted by a injector 60 provided inside the spraying gun 30.

The apparatus 10 shown in FIG. 1 serves as an electrostatic coating apparatus, causing the particulate mixture 20 to become attached temporarily to the core plate 40. The adhesion of the particulate mixture to the core plate is sufficient to prevent the particles from dropping off the core plate as it is transferred to the next stage of the friction plate manufacturing process.

Although the high voltage source need not be connected directly to the core plate to establish the requisite degree of electrostatic attraction, if one pole of the high voltage source is connected to the electrode 50 and the other pole is grounded, grounding of the core plate, as depicted in FIG. 1, effectively connects the high voltage source directly to core plate, and causes the particulate mixture 20 to become attached to the core plate 40 more strongly and efficiently.

Larger diameter particles tend to adhere more weakly to the core plate. Weak adhesion can also be experienced, depending on the ratio of the components of the particulate mixture 20. In these cases, when the particulate mixture 20 needs to be attached more strongly to the core plate 40, the surface of the core plate may be preliminarily roughened or activated by processes such as etching or abrasive blasting, or an adhesive may be applied to the surface of the core plate.

After the particulate mixture is temporarily attached to the core plate 40 by electrostatic attraction, the core plate is suspended in an oven or electric furnace and heated, causing the friction material to become bonded to core plate 40 by the thermosetting resin contained in the particulate mixture 20. Thus, the friction material can be bonded to the core plate 40 easily, without the need for a powder filling machine for filling a die with a friction material, and without the need for a heating plate press, jig or the like. FIGs. 2(a) and 2(b) show a friction plate 102 in which the friction material is more strongly attached to a core plate by virtue of through holes in the core plate. As shown in FIG. 2(a), a plurality of through-holes 420 is provided in the core plate 42. When the particulate mixture 20 is spread over the core plate 42 of FIG. 2(a) by electrostatic coating, the particles 20 enter the through-holes 420. The mixture is spread over both sides of the core plate, and extends through the holes 420 as shown in FIG. 2(b). Because the layers on both sides of the core plate are connected by elements of the mixture extending through holes 420, the adhesion efficiency is improved, and the particulate mixture 20 is temporarily attached more strongly to the core plate.

The nozzle of spraying gun 30 may be circular, annular, rectangular, or in any of various other shapes, according to the desired spray pattern of the particulate mixture 20. Before the electrostatic coating process is commenced, the core plate may be heated to a temperature the range of 50°C to 300°C. When the core plate is preliminarily heated in this manner, a part of resin contained in the particulate mixture sprayed onto the core plate melts, thereby improving adhesion of the mixture to the core plate. Therefore, even when the sprayed particles have relatively large diameters or a relatively high specific gravity, and when a large quantity of the particulate mixture is sprayed onto the core plate to form a thick layer, the particulate mixture, which is temporarily attached to the core plate by electrostatic coating, can be prevented from dropping off. To enhance temporary adhesion of the particulate mixture to the core plate by preliminary heating of the core plate it is preferred that the temperature of the core plate be in the range of 100°C to 200°C, because the resin does not melt when the temperature of the core plate is about 50°C degrees or less, and the resin cures after adhesion, when the temperature of the core plate is 300°C or more.

In the electrostatic coating process, the particulate mixture may be sprayed efficiently from a spraying gun 30 when the diameters of the particles of the particulate mixture are in the range from 10 to 500 micrometers. When particle diameter is 10 micrometers or less, the particles tend to cohere before they are supplied to the spraying gun 30. When the particle diameter is 500 micrometers or more, particles, when temporarily attached to the core plate, occasionally fall off the core plate under their own weight. Because of these considerations, suitable particle diameter is preferably in the range of 45 to 355 micrometers.

It is difficult to establish an adequate electrostatic charge in conducting particles such as a metal particles, carbon particles, and the like. Accordingly, such particles tend to falls off the core plate if an attempt is made to apply them by electrostatic coating. Therefore, when conducting materials such as metal particles or carbon particles, are used as friction materials, it is preferable that the surface of the conducting particle be preliminarily coated with a non-conducting material such as a resin or inorganic fine particles.

A friction layer for use in a wet type frictional engagement apparatus needs to be porous in order to function properly, and it is desirable that its porosity be in the range from 5 to 50%. In addition, it is desirable that the average diameter of a pores be in the range of 1 to 30 micrometers. In accordance with the invention, the porosity of the friction layer may be adjusted by changing the voltage applied to the electrode 50 of the spraying gun 30, by changing the air pressure applied to the spraying gun 30, and by selecting an appropriately shaped nozzle for the spraying gun 30. By way of example, a friction layer having a dense structure of low porosity may be obtained by using small diameter friction material particles, increasing the resin content of the particulate mixture, increasing the electrode voltage, and increasing the air pressure applied to the spraying gun 30.

Where the porosity of the friction layer is 5% or less in a wet type frictional engagement apparatus, the coefficient of friction may not be sufficient, since the oil film on the friction surface cannot be broken easily. At a porosity of 5% or less, the cooling function also deteriorates. On the other hand, where the porosity of the friction layer is 50% or more, the strength of a friction layer deteriorates, and the friction layer is liable to be broken by shear forces when subjected to repeated compression or heavy load. Therefore, a suitable porosity of a friction material is preferably in the range of 10 to 40%.

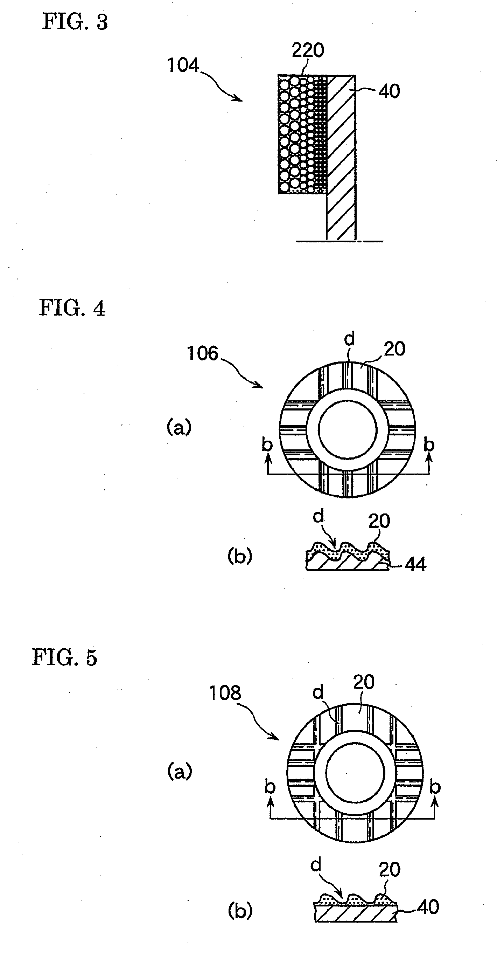

In order to achieve stable friction characteristics in a friction plate, it is necessary that the pore diameter in a friction layer be sufficiently large that the pores do not become clogged as the friction plate slides relative to a mating plate. However, when all the pores of the friction layer are of large diameter, the strength of the friction layer deteriorates. Therefore, as shown in FIG. 3, it is preferable to form the friction layer 220 of a friction plate 104 so that the diameters of its pores vary in the direction of its thickness, and specifically so that the diameters of the pores are larger at the outer surface of the friction layer, and gradually become smaller nearer the core plate 40.

The friction layer 220, having a gradually varying pore diameter, may be obtained by controlling coating conditions in the electrostatic coating process. The coating conditions that affect pore diameter include the composition and particle diameters of the particulate material to be attached to the core plate 40, the voltage applied to the electrode 50 of the spraying gun 30, and the air pressure applied to the spraying gun 30. Similar results can be achieved by using a plurality of electrostatic coating apparatuses in sequence to apply successive layers of particulate material to the core plate. For example, the gradually varying pore diameter can be realized by first spraying a particulate mixture having a large resin content onto a core plate 40, and thereafter spraying particulate mixtures having a gradually decreasing resin content. In this way, the diameters of the pores will gradually become larger near the outer surface of the friction layer.

Furthermore, after a particulate mixture 20 is temporarily attached to a core plate 40 by the electrostatic coating apparatus, pressure may be applied to the friction material in the heat treatment process to achieve a desired porosity and pore diameter. Bond strength may be also improved by the application of pressure.

Figures 4(a), 4(b), 5(a) and 5(b) show friction plates, in which grooves d are provided in the surfaces of friction layers of friction plates manufactured by the method of this invention.

FIGs. 4(a) and 4(b) show a friction plate 106 in which grooves are formed in the core plate 44 before the core plate is coated. This friction plate 106 is produced by temporarily attaching a particulate mixture 20 to the core plate 44 by electrostatic coating, and thereafter subjecting the coated plate to heat treatment. In this case the friction layer which is bonded to the core plate 44 has a substantially constant thickness, and the grooves d in the outer surface of the friction layer correspond to the grooves initially formed in the surface of the core plate.

On the other hand, FIGs. 5(a) and 5(b) shows a friction plate 108 in which grooves d are formed in a friction layer on a flat core plate 40 by varying the amount of friction material applied to different areas of the core plate. In the electrostatic coating process, the particulate mixture 20 may be prevented from attaching to the parts of the plate 40 corresponding to grooves d by covering those parts with a jig, or by applying a masking agent to those parts.

Non-conducting wax, or other coating material used as a masking agent may be applied to the core plate by screen printing, for example. Therefore, even if a grooves are of complicated shape, they may be formed comparatively easily. When paraffin wax is used as a masking agent, post-processing is not needed, since the masking agent melts and peels off naturally in the heat treatment process.

In the above-described friction plates 100, 102, 104, 106 and 108, it is preferable that at least one kind of material selected from an inorganic fiber, inorganic powder, organic fiber, organic powder, metal fiber, metal powder, carbon fiber, and carbon powder be included in the particulate mixture 20, containing a thermosetting resin, so that heat resistance and wear resistance of the friction material may be improved, and superior friction characteristics, stability, and durability may be obtained.

Performance of a friction plate produced by the manufacturing method according to the invention will now be explained. The kinds of materials which were used, the particle diameters of each material, and their proportions are shown in TABLE 1.

**TABLE 1**

| KIND | PARTICLE DIAMETER | CONTENT(wt%) |
|---|---|---|
| PHENOL RESIN | ≦45µm | 20 |
| CARBON PARTICLE | 45µm≦ ≦250µm | 50 |
| INORGANIC FIBER | ≦75µm | 20 |
| METAL PARTICLE | ≦75µm | 10 |

After this particulate mixture was mixed at 300 rpm for 15 minutes in a planetary mixer and dried, it was sieved through a sieve, and a material having a particle diameter of 45 to 355 micrometers was extracted. The sieved particulate mixture was put into the supply tank of an electrostatic coating apparatus as shown in FIG. 1. While the particulate mixture was agitated by dehumidified air introduced as a jet through an agitation air nozzle in the supply tank, the friction material in the supply tank was transferred to a spraying gun through a transfer pipe by air flowing through an air pipe. The injector was adjusted so that the particulate mixture was supplied to the spraying gun at 250g per minute.

A voltage of 60 KV was applied to an electrode in the nozzle of the spraying gun. The particulate mixture was sprayed through a circular nozzle at an air pressure of 0.2 MPa.

The core plate was made of a cold rolled steel plate (SPCC) and phenolic resin adhesive was applied to the surface of the core plate before coating thereof by the particulate mixture. In addition, a jig was arranged at the surface of the core plate to produce a groove pattern corresponding to the pattern illustrated in FIG. 5(a). The core plate was grounded and fixed at a position 200 mm away from the spraying gun. After the core plate was electrostatically coated by the particulate mixture, the core plate with the particulate mixture temporarily attached to it was heated in an oven at a temperature of 250°C for 15 minutes to cure the thermosetting resin and join the friction material with the core plate. The heating temperature for curing the friction material temporarily attached to the core plate is preferably in the range of 150°C to 300°C. After the heat treatment process, cutting was carried out on the outer surfaces of the friction layers to improve the accuracy of the thickness, parallelism and flatness of the friction plate.

Basic physical properties of the friction layer of the friction plate obtained in the above-described process are shown in TABLE 2.

**TABLE 2**

| POROSITY | HARDNESS | MODULUS OF ELASTICITY | SURFACE ROUGHNESS |
|---|---|---|---|
| 25 vol% | HRR106 | 800MPa | Rz50µm |

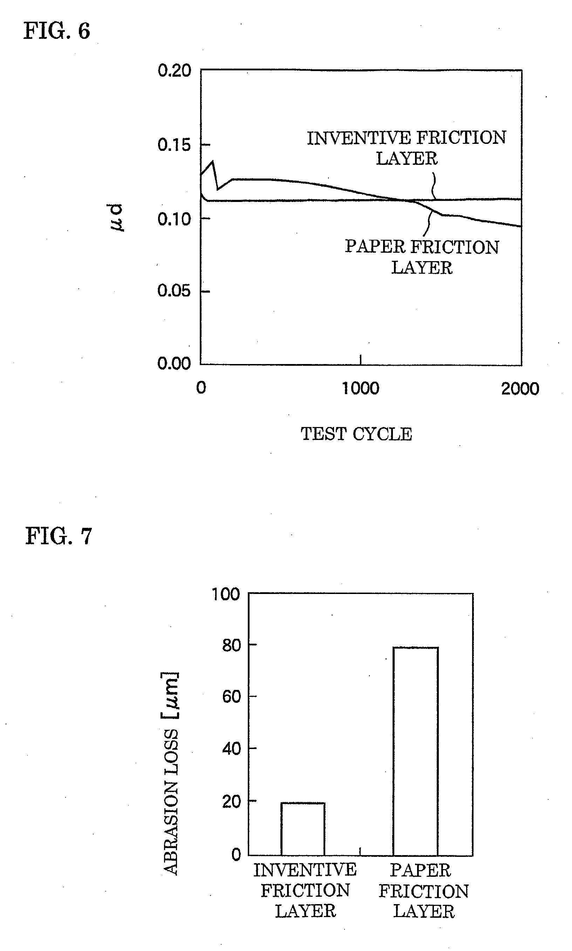

Friction/wear characteristics of the carbon friction material produced by the method according to the invention, and conventional paper friction material, were compared under the condition shown in TABLE 3, and the results are shown in FIGs. 6 and 7.

**TABLE 3**

| ABSORBED ENERGY | ROTATING SPEED | SURFACE PRESSURE | OIL TEMPERATURE | NUMBER OF REPETITIONS |
|---|---|---|---|---|
| 160 J/cm² | 3400 rpm | 2MPa | 120°C | 2000 |

As shown in FIG. 6, in the case of the friction plate produced by the manufacturing method according to the invention, the coefficient of friction does not change greatly and excellent friction characteristics are obtained. Moreover, as shown in FIG. 7, the friction layer of the friction plate produced by a method according to the invention has the advantage that its abrasion loss is small as compared with a conventional paper friction layer.

In summary, according to the invention, a friction plate having a friction layer with a porous structure may be easily produced using a powdery or staple fiber-shaped friction material.

When the core plate is grounded during the coating process, the particulate mixture may be sprayed onto the core plate easily, and the particulate mixture will be more strongly attached to the core plate before and during the heating step.

In addition, if surface of the core plate is made rough, or an adhesive is applied to the surface of the core plate, the sprayed particulate mixture can be more strongly attached to the core plate.

When a through-holes are provided in the core plate, the sprayed particulate mixture extends through a through hole, thereby more securely holding the particulate mixture to the core plate on both sides thereof.

When the core plate is heated before coating, the resin in the particulate mixture which is temporarily attached may be partially cured, thereby improving the adhesion of the particulate mixture to the core plate.

In addition, when the maximum dimensions of the particles are in the range of 10 to 500 micrometers, the amount of the particulate mixture sprayed to the core plate becomes stable.

When a conducting material as the friction material, the surface of the conducting material is preferably coated with a non-conducting material so that the particulate mixture will adhere adequately to the core plate by electrostatic attraction.

When the particulate mixture sprayed or scattered onto the surface of the core plate has a varying composition and/or varying particle size in the direction of thickness of the friction layer, the porosity and particle dimensions of the friction layer can be controlled for improved frictional characteristics at the surface of the layer without sacrificing strength.

In addition, when the particulate mixture includes at least one kind of material selected from an inorganic fiber, inorganic powder, organic fiber, organic powder, metal fiber, metal powder, carbon fiber, and carbon powder, improved friction characteristics and wear resistance of the friction material can be realized.

When pressure is applied during heating the friction material temporarily attached to the core plate, the strength of the bond between the friction layer and the core plate is improved, and the porosity of the friction layer and the diameters of its pores can be better controlled.

When a grooved core plate is used, or when the particulate mixture is sprayed onto the core plate after a non-conducting masking agent is applied to the surface of the core plate or a jig is arranged on the surface of the core plate, a friction plate having grooves necessary for a wet type frictional engagement apparatus can be produced easily.

Although a dry type electrostatic coating apparatus is preferably used in the method of the invention because it has the advantage of recycling of materials, a wet type electrostatic coating apparatus may be used, depending on the kind of a friction material.

The outer surface of the friction layer may be subjected to machining by grinding or polishing to produce the necessary surface properties. In addition, desired surface properties may be obtained by pressing a die against the surface while the friction material is cured.

It should be understood that various modifications can be made to the process described. For example, whereas electrostatic coating of the core plate has been described as carried out using a spraying gun, similar results can be achieved by temporarily attaching the particulate mixture to the core plate by scattering instead of spraying.

## Claims

1. A method of manufacturing a friction plate comprising the steps of:
preparing a particulate mixture comprising a thermosetting resin and a friction material from the group consisting of powder, staple fiber-shaped material, and mixtures thereof;
electrifying said particulate mixture, and temporarily attaching said mixture to a metal core plate by spraying or scattering said particulate mixture onto the core plate; and
heating said particulate mixture while it is temporarily attached to the core plate, thereby curing the thermosetting resin which is contained therein so that said mixture is converted to a rigid friction layer and bonded to said core plate.

2. A method of manufacturing a friction plate as claimed in claim 1, wherein said core plate is grounded while said mixture is temporarily attached thereto.

3. A method of manufacturing a friction plate as claimed in claim 1, wherein said core plate has a roughened surface when said mixture is temporarily attached thereto.

4. A method of manufacturing a friction plate as claimed in claim 1, wherein an adhesive is applied to the surface of said core plate before said mixture is temporarily attached thereto.

5. A method of manufacturing a friction plate as claimed in claim 1, wherein a through-hole is provided in said core plate.

6. A method of manufacturing a friction plate as claimed in claim 1, wherein said core plate is heated to a temperature in the range of 50°C to 300°C in the heating step.

7. A method of manufacturing a friction plate as claimed in claim 1, wherein the particle diameter of said particulate mixture is crushed or granulated so that the maximum dimensions of the particles thereof are in the range of 10 to 500 micrometers when said mixture is sprayed or scattered onto the core plate.

8. A method of manufacturing a friction plate as claimed in claim 1, wherein at least a part of said friction material is an electrically conductive material coated with a non-conducting material.

9. A method of manufacturing a friction plate as claimed in claim 1, wherein the particle size and/or composition said particulate mixture is varied as said particulate mixture is sprayed or scattered onto the surface of said core plate, whereby the pore diameter of the friction layer varies in the direction of its thickness.

10. A method of manufacturing a friction plate as claimed in claim 1, wherein said particulate mixture includes at least one kind of material selected from an inorganic fiber, inorganic powder, organic fiber, organic powder, metal fiber, metal powder, carbon fiber, and carbon powder.

11. A method of manufacturing a friction plate as claimed in claim 1, wherein pressure is applied while said particulate mixture which is temporarily attached to said core plate is heated.

12. A method of manufacturing a friction plate as claimed in claim 1, wherein at least one groove is formed in the surface of said core plate before said particulate mixture is temporarily attached thereto.

13. A method of manufacturing a friction plate as claimed in claim 1, wherein the step of spraying or scattering said particulate mixture onto the core plate is carried out after a masking agent or jig for preventing adhesion of said particulate mixture is applied to a part of the core plate, whereby a groove is formed in said friction layer.

14. A method of manufacturing a friction plate as claimed in claim 1, wherein an average diameter of a pore of said friction layer is in the range of 1 to 30 micrometers and its porosity is in the range of 5 to 50%.

15. A method of manufacturing a friction plate as claimed in claim 1, wherein the diameters of the pores or the porosity of the friction layer varies in the direction of the thickness of said friction layer.

16. A method of manufacturing a friction plate as claimed in claim 1, wherein, following said heating step, an outer surface of the friction layer is finished by machining.

17. A method of manufacturing a friction plate as claimed in claim 1, wherein a die is pressed against an outer surface of the friction layer while the particulate mixture which is temporarily attached to said core plate is cured.

18. A method of manufacturing a friction plate as claimed in claim 1, wherein said friction material is cured by heating the particulate mixture which is temporarily attached to said core plate at a temperature of 150°C to 300°C.
